# EUROPÄISCHE PATENTSCHRIFT

(11) **EP 3 475 089 B1**
(45) Veröffentlichungstag und Bekanntmachung des Hinweises auf die Patenterteilung: **05.08.2020**
(21) Anmeldenummer: 17732029.8
(22) Anmeldetag: 14.06.2017
(51) Int. Cl.: B32B 27/34, B32B 27/06, B32B 21/08, B32B 7/04, B32B 7/02, B32B 27/16, B32B 27/18, B32B 7/10, B32B 27/20, B32B 7/12, B32B 7/14, B32B 7/00, B32B 21/00, B32B 27/08, B32B 27/28, B32B 27/30, B32B 27/36

(54) **KANTENLEISTE FÜR MÖBELSTÜCKE**
EDGE TRIM FOR PIECES OF FURNITURE
BANDE DE CHANT POUR MEUBLES

(30) Priorität: 28.06.2016 DE 202016103409 U
(43) Veröffentlichungstag der Anmeldung: 01.05.2019
(73) Patentinhaber: REHAU AG + Co, 95111 Rehau (DE)
(72) Erfinder: KRÄMER, Uwe, 95111 Rehau (DE); AFFELDT, Jens-Uwe, 08258 Breitenfeld (DE)
(86) Internationale Anmeldenummer: PCT/EP2017/000697
(87) Internationale Veröffentlichungsnummer: WO 2018/001545

(56) Entgegenhaltungen:
- EP-A1- 1 163 864
- DE-A1- 4 239 336
- DE-U1-202014 106 167
- DE-U1-202014 106 173
- GB-A- 1 496 508
- US-B2- 8 603 610

## Beschreibung

Die Erfindung betrifft eine Kantenleiste für Möbelstücke, umfassend eine Schmelzschicht, sowie eine mit der Schmelzschicht verbundene Strukturschicht, die beide wenigstens teilweise einen polymeren Werkstoff aufweisen sowie ein Möbelstück mit einer solchen Kantenleiste.

Aus der EP 1 163 864 sind eine Möbelplatte und ein Verfahren zu deren Herstellung bekannt. Es wird eine gattungsgemäße Kantenleiste beschrieben, bei der die Schmelzschicht mit Holzwerkstoffen durch den Einsatz der Lasertechnik verschweißt werden kann.

Zur Fixierung dieser gattungsgemäßen Kantenleiste an Möbelstücken ist es bei verschiedenen Werkstoffen schwierig, einen sicheren Halt der polymeren Kantenleiste am Möbelstück zu realisieren.

Die GB1496508 A / DE 2361486 A offenbart eine wärmestandsfeste Kantenverleimung unter Verwendung eines Schmelzklebers, bestehend aus:
A) ein Polyamidharz aus
   a) 0,5-0,8 Äquivalente einer polymeren Fettsäure mit einem Gehalt an dimerer Fettsäure von 70-100 Gewichts-Prozent
   b) 0,2-0,5 Äquivalente einer Co- Dicarbonsäure der allgemeinen Formel HOOC-R-COOH, wobei R einen Alkylenrest von 4-10 Kohlenstoffatomen darstellt
   c) 0-0,6 Äquivalente Ethylendiamin
   d) 0,4-1,0 Äquivalente Piperazin
   wobei das Äquivalenzverhältnis von Carbonsäuren und Diaminen etwa gleich groß ist, und aus
B) 5-80 Gewichts-Prozent an anorganischen Füllstoffen, als Kantenleimer für wärmestandfeste Kantenverleimungen.

Die DE 202014106173U1 offenbart eine Kantenleiste für Möbelstücke, umfassend eine Schmelzschicht und eine mit der Schmelzschicht verbundene Strukturschicht, die beide wenigstens teilweise einen Polymeren Werkstoff aufweisen, wobei die Schmelzschicht Zusatzstoffe enthält, wobei die Schmelzschicht wenigstens einen eine Verfärbung verursachenden, wenigstens teilweise anorganische und/oder organische Pigmente enthaltenden, Zusatzstoff in einer Menge von etwa 0,01-10 Gewichts-Prozent, bevorzugt 0,02-5 Gewichts-Prozent, bezogen auf ihr Gesamtgewicht, aufweist.

Die DE 202014106167U1 offenbart eine Kantenleiste für Möbelstücke, umfassend wenigstens eine Schmelzschicht und eine mit der Schmelzschicht verbundene Strukturschicht, die beide wenigstens teilweise einen Polymeren Werkstoff aufweisen, sowie wenigstens eine Funktionsschicht, wobei die Funktionsschicht sowohl polare als auch unpolare Anteile im Molekülaufbau enthält über die Schmelzschicht, diese zumindest teilweise bedecken, von der Strukturschicht beabstandet angeordnet ist, wobei der Werkstoff der Funktionsschicht ausgewählt ist aus der Gruppe der Polymerlösungen oder Polymerdispersionen, insbesondere der lösemittelhaltigen oder vorzugsweise wässrigen Polymerlösungen oder Polymerdispersionen.

Der Erfindung liegt die Aufgabe zugrunde, eine Kantenleiste für Möbelstücke bereitzustellen, die unabhängig vom Werkstoff eines Möbelstücks, an wenigstens einer Kante dieses Möbelstücks optisch ohne Trennfuge sowie klebstofffrei fixierbar ist und die im Verbindungsbereich zum Möbelstück eine erhöhte Wasserbeständigkeit aufweist.

Um diese Aufgabe zu lösen, stellt die Erfindung eine Kantenleiste für Möbelstücke mit den Merkmalen gemäß Anspruch 1 sowie ein Möbelstück mit den Merkmalen des Anspruches 13 bereit.

Es hat sich überraschend herausgestellt, dass eine Kantenleiste für Möbelstücke, umfassend eine Schmelzschicht sowie eine mit der Schmelzschicht verbundene Strukturschicht, die beide wenigstens teilweise einen polymeren Werkstoff aufweisen, sich dadurch auszeichnet, dass der Werkstoff der Schmelzschicht ausgewählt ist aus der Gruppe der Polyamide (PA), vorzugsweise eines aliphatischen und / oder teilaromatischen und / oder aromatischen Polyamids, wobei der Werkstoff der Schmelzschicht ein Copolyamid ist, welches ausgehend von Polyamidbildnern, ausgewählt aus der Gruppe, umfassend Caprolactam, Laurinlactam, Aminoundecansäure, Hexamethylendiamin, Adipinsäure, Azelainsäure, Dodecandisäure, Piperazin und dergleichen, hergestellt ist und einen Schmelzflussindex (MFI) von wenigstens 10 g / 10 min., bevorzugt 15 g bis 100 g / 10 min., besonders bevorzugt 15 g bis 50 g/ 10 min. gemäß DIN ISO 1133 bei 160 °C / 1,20 kg aufweist. Hierdurch ist vorteilhafterweise erreichbar, dass eine derart ausgebildete erfindungsgemäße Kantenleiste sehr leicht ohne Klebstoff an den Schmalseiten von Möbelstücken anbringbar ist, wobei die dafür notwendige Energie zur Aktivierung bzw. zur Überleitung der Schmelzschicht, welche aus einem polymeren Werkstoff besteht, vom festen in einen plastischen bzw. flüssigen Zustand geringer ist als beim bisher bekannten Stand der Technik.
Weiterhin vorteilhaft bei der erfindungsgemäßen Kantenleiste ist, dass es durch die erfindungsgemäße Ausbildung der Schmelzschicht möglich ist, chemische Bindungen, insbesondere Nebenvalenzbindungen sowohl zum Werkstoff des Möbelstücks, welches aus einem holzartigen Werkstoff besteht, als auch zu den auf den Flächen des Möbelstück angebrachten Deckschichten, beispielsweise aus papierartigen bzw. folienartigen Werkstoffen, zu realisieren.
Mit der erfindungsgemäßen Kantenleiste insbesondere mit dem Werkstoff der Schmelzschicht ist es somit überraschenderweise erstmals möglich chemische Bindungen, insbesondere Nebenvalenzbindungen zu allen Werkstoffen der Schmalseite des Möbelstücks herzustellen, insbesondere auch Wasserstoffbrückenbindungen zu den Deckschichten. Der Werkstoff der Schmelzschicht der erfindungsgemäßen Kantenleiste kann aber auch kovalente Bindungen, Nebenvalenzbindungen und Wasserstoffbrückenbindungen zu Haftvermittlersystemen insbesondere solchen mit reaktiven Gruppen eingehen.
Hierdurch ist es möglich, dass die erfindungsgemäße Kantenleiste einen optimalen stoffschlüssigen Verbund zur Schmalseite des Möbelstücks aufweist und somit auch höhere Haftfestigkeitswerte bzw. Schälfestigkeitswerte gemäß DIN 28510 erstmals erreichbar sind.

Ein weiterer Vorteil der erfindungsgemäßen Kantenleiste besteht darin, dass durch die erfindungsgemäße Ausbildung insbesondere des Werkstoffes der Schmelzschicht für das hergestellte Möbelstück bessere bzw. höhere Werte der für Möbelstücke wichtigen Feuchtebeständigkeit erstmals realisierbar sind, da die bisherige Schwachstelle im Stand der Technik, nämlich die Verbindung des Werkstoffes der Schmelzschicht mit der auf dem Möbelstück aufgebrachten Deckschicht, wie bspw. CPL- Schichtstoff, HPL- Schichtstoff sowie melamingetränkte Papierwerkstoffe, optimiert ist, indem zumindest Bestandteile des Werkstoffes der Schmelzschicht mit Teilen der Werkstoffe der Deckschichten über chemische Bindungen, insbesondere Nebenvalenzbindungen, sowie Wasserstoffbrückenbindungen realisierbar sind, die einerseits für die hohen Haftfestigkeits- bzw. Schälfestigkeitswerte relevant sind und andererseits auch für die besseren bzw. höheren Werte der für Möbelstücke wichtigen Feuchtebeständigkeit. CPL- Schichtstoff ist dabei ein *"Continuous Pressure Laminate",* welche im kontinuierlichen Verfahren aus mehreren Lagen Papier und Harz hergestellt sind. HPL- Schichtstoff ist ein *"High Pressure Laminate", welches* im Hochdruckpress-Verfahren hergestellt ist in Plattenform aus mehreren Lagen Papier und Harz.
Ein weiterer Vorteil besteht darin, dass auch eine bessere Adhäsion des Werkstoffes der Schmelzschicht zu Deckschichten aus polymeren Werkstoffen wie bspw. PET realisierbar ist. PET ist dabei Polyethylenterephthalat, welches ein durch Polykondensation hergestellter thermoplastischer Kunststoff aus der Familie der Polyester ist.

Es hat sich ebenfalls als vorteilhaft herausgestellt, dass der Werkstoff der Schmelzschicht wenigstens ein Copolyamid mit einem Schmelztemperaturbereich von etwa 95 bis 130 °C, vorzugsweise 100 bis 125 °C aufweist. Hierdurch ist es möglich, eine erfindungsgemäße Kantenleiste zur Verfügung zu stellen, die einerseits mit einem geringen Eintrag an Energie in die Schmelzschicht mit der Schmalseite des Möbelstücks stoffschlüssig verbindbar ist und die andererseits jedoch eine wesentlich höhere Haftfestigkeit bzw. Schälfestigkeit des Möbelstücks aufweist.

Ein weiterer Vorteil der erfindungsgemäßen Kantenleiste besteht darin, dass der Werkstoff der Schmelzschicht wenigstens ein weiteres Copolyamid und/oder wenigstens ein weiteres Polyamid, sowie Mischungen aus wenigstens zwei dieser Materialien, enthält. Durch die Variation der Werkstoffe der Schmelzschicht ist die erfindungsgemäße Kantenleiste nicht nur wirtschaftlich und kostengünstig herstellbar, sondern auch äußerst vielseitig für verschiedenste Werkstoffe von Möbelstücken einsetzbar.
Insbesondere durch die vorteilhaften Eigenschaften des Werkstoffes der Schmelzschicht der erfindungsgemäßen Kantenleiste ist diese sowohl klebstofffrei mit Energie aus einer Energiequelle ausgewählt aus der Gruppe Laserquelle, Infrarotquelle, Ultraschallquelle, Magnetfeldquelle, Mikrowellenquelle, Plasmaquelle sowie Begasungsquelle und dergleichen beaufschlagt zur Bekantung von Möbelstücken einsetzbar.

In einer weiteren vorteilhaften Ausgestaltung der erfindungsgemäßen Kantenleiste weist der Werkstoff der Schmelzschicht eine kristalline Dichte ρ_{c} von wenigstens 1,13 g/cm³ nach DIN EN ISO 1183-1 (2013-04) auf. Durch diese vorteilhafte Ausgestaltung des Werkstoffes der Schmelzschicht der erfindungsgemäßen Kantenleiste verfügt dieser über ausreichend polare Anteile, sodass bei Anbringung der erfindungsgemäßen Kantenleiste an die Schmalseiten von Möbelstücken eine optimierte Haftfestigkeit bzw. Schälfestigkeit bei gleichzeitig besserer Feuchtebeständigkeit realisierbar ist. Der Werkstoff der Schmelzschicht der erfindungsgemäßen Kantenleiste ist in diesen kristallinen Bereichen im Allgemeinen dichter strukturiert als in den sog. amorphen Bereichen. Die kristalline Dichte wird dabei aus dem kristallinen Aufbau berechnet, während die amorphe Dichte experimentell am amorphen Material gemessen wird.

Ein weiterer Vorteil der erfindungsgemäßen Kantenleiste besteht darin, dass der Werkstoff der Schmelzschicht eine Härte Shore D von wenigstens 40 gemäß DIN EN ISO 868 aufweist. Hierdurch ist einerseits die wirtschaftliche und kostengünstige Herstellung der erfindungsgemäßen Kantenleiste gewährleistet und andererseits ist es möglich, den Werkstoff der Schmelzschicht der erfindungsgemäßen Kantenleiste den jeweiligen Anforderungen an die zu bekantenden Möbelstücke anzupassen. Weiterhin vorteilhaft ist die damit erreichbare bessere Verarbeitbarkeit bei der Anbringung der erfindungsgemäßen Kantenleiste an die Schmalseiten der Möbelstücke.

Die erfindungsgemäße Kantenleiste zeichnet sich weiterhin dadurch aus, dass der Werkstoff der Schmelzschicht eine Zugfestigkeit von wenigstens 700 MPa nach DIN EN ISO 527 sowie eine Bruchdehnung von wenigstens 400 % nach DIN EN ISO 527 aufweist.

Ebenfalls vorteilhaft bei der erfindungsgemäßen Kantenleiste ist, dass der Werkstoff der Schmelzschicht eine Oberflächenspannung von wenigstens 35 mN/m nach DIN EN 14370 aufweist. Dies führt zu einer verbesserten Adhäsion zu anderen, insbesondere polaren Werkstoffen.

In einer weiteren vorteilhaften Ausgestaltung der erfindungsgemäßen Kantenleiste hat sich gezeigt, dass die der Schmelzschicht gegenüberliegend angeordnete Seite der Strukturschicht einer Oberflächenbehandlung durch ein Coronaverfahren, Beflammungsverfahren, Plasmaverfahren, Silikätisierungsverfahren und dergleichen unterworfen wurde. Hierdurch kann ein optimierter Verbund der Schmelzschicht mit der Strukturschicht der erfindungsgemäßen Kantenleiste für verschiedenste Werkstoffkombinationen insbesondere der Schmelzschicht jederzeit realisiert werden.

In einer ebenfalls vorteilhaften Ausgestaltung der erfindungsgemäßen Kantenleiste hat sich gezeigt, dass der Werkstoff der Schmelzschicht und/oder der Werkstoff der Strukturschicht licht- und/oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält. In dieser Ausgestaltung der erfindungsgemäßen Kantenleiste ist diese durch an sich bekannte Laserfügeverfahren optimal durch das gezielte Einbringen der Energie in den Werkstoff der Schmelzschicht an den Schmalseiten von Möbelstücken verschweißbar.

Es hat sich weiterhin vorteilhaft herausgestellt, dass der Werkstoff der Schmelzschicht und/oder der Werkstoff der Strukturschicht wenigstens einen, teilweise anorganische und/oder organische Pigmente enthaltenden, Zusatzstoff in einer Menge von etwa 0,01 bis 5,0 Gew.-%, bevorzugt 0,02 bis 3,0 Gew.-%, bezogen auf die Gesamtmenge, eingelagert enthält. Hierdurch ist es möglich, die erfindungsgemäße Kantenleiste mit allen derzeit bekannten strahlungsaktivierbaren Verfahren an den Schmalseiten von Möbelstücken kostengünstig und wirtschaftlich anzubringen.

Weiterhin vorteilhaft bei der erfindungsgemäßen Kantenleiste ist, dass der Zusatzstoff der Schmelzschicht und/oder der Strukturschicht ausgewählt ist aus der Gruppe der Metalloxide, der Metallphosphate sowie der Metallsalze organischer Anionen. Durch die Auswahl der Zusatzstoffe kann eine erfindungsgemäße Kantenleiste zur Verfügung gestellt werden, die jeweils optimiert auf die strahlungsaktivierten Anbringungsverfahren aber auch auf die Werkstoffe der Möbelstücke abgestimmt ist.

In einer weiteren vorteilhaften Ausführungsform der erfindungsgemäßen Kantenleiste ist, dass der Werkstoff der Schmelzschicht polare Gruppen basierend auf Amiden, Aminen, Carbonsäuren bzw. deren Ester bzw. Salze insbesondere Acrylsäure, Acrylsäureester, Silanen, Titanaten, Alkoholen, Imiden, Ammoniumverbindungen oder Sulfonsäuren bzw. deren Estern oder Salzen, geblockten Isocyanaten oder dgl. aufweist. Durch die verschiedenen Möglichkeiten im Werkstoff der Schmelzschicht polare Gruppen anzuordnen kann eine erfindungsgemäße Kantenleiste zur Verfügung gestellt werden, bei der der Werkstoff der Schmelzschicht sowohl polare sowie auch unpolare Anteile aufweist.

Durch die Variation insbesondere der polaren Gruppen im Werkstoff der Schmelzschicht ist es erstmals möglich, eine erfindungsgemäße Kantenleiste zur Verfügung zu stellen, bei der der Werkstoff der Schmelzschicht so optimiert ausgebildet ist, sodass er bei bestimmungsgemäßer Verwendung wenn die erfindungsgemäße Kantenleiste stoffschlüssig mit der Schmalseite des Möbelstücks verbunden ist, sowohl optimale Festigkeitswerte bzw. Schälfestigkeitswerte als auch gleiche bzw. bessere Wasserbeständigkeitswerte realisierbar sind.

Ein weiterer Vorteil der erfindungsgemäßen Kantenleiste besteht darin, dass die Strukturschicht auf Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien basiert. Dabei können dem polymeren Werkstoff der Strukturschicht geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten.

Weiterhin ist die erfindungsgemäße Kantenleiste vorteilhafterweise so ausgebildet, dass der Werkstoff der Schmelzschicht und/oder der Strukturschicht wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher. Somit kann eine erfindungsgemäße Kantenleiste zur Verfügung gestellt werden, die einerseits wirtschaftlich und kostengünstig herstellbar ist, die aber auch die bisher aus dem Stand der Technik bekannten Haftfestigkeitswerte bzw. Schälfestigkeitswerte sowie die insbesondere für Möbelstücke wichtige Wasserbeständigkeit wesentlich verbessert. Die erfindungsgemäße Kantenleiste ist weiterhin so ausgebildet, dass der Werkstoff der Schmelzschicht über wenigstens eine Funktionsschicht von der Strukturschicht beabstandet angeordnet ist. Diese Funktionsschicht der erfindungsgemäßen Kantenleiste dient dazu, dass ein optimaler Verbund zwischen dem Werkstoff der Schmelzschicht und dem Werkstoff der Strukturschicht für die verschiedensten Werkstoffkombinationen insbesondere des Werkstoffes der Schmelzschicht jederzeit kostengünstig und wirtschaftlich realisierbar ist.

Es hat sich weiterhin als äußerst vorteilhaft herausgestellt, dass der Werkstoff der Funktionsschicht ausgewählt ist aus der Gruppe der Polyurethane (PUR), der Acrylate, der Chloroprene, der Epoxidharze, der Ethylenvinylacetate (beispielsweise EVA-Dispersionen), der Polyvinylacetate (PVAC-Dispersionen) und dergleichen, sowie Mischungen aus zwei oder mehreren der vorgenannten Stoffe. Der Werkstoff der Funktionsschicht ist dabei bei der direkten Herstellung der erfindungsgemäßen Kantenleiste auf die Strukturschicht und/oder die Schmelzschicht aufbringbar.

Es hat sich weiterhin als vorteilhaft herausgestellt, dass die Funktionsschicht der erfindungsgemäßen Kantenleiste eine Dicke von etwa 0,1 µm bis 100 µm, vorzugsweise 0,2 µm bis 75 µm, besonders bevorzugt 0,5 bis 30 µm aufweist. Dies führt vorteilhafterweise neben einer wirtschaftlichen und kostengünstigen Herstellung der erfindungsgemäßen Kantenleiste dazu, dass die Funktionsschicht der jeweiligen Geometrie der erfindungsgemäßen Kantenleiste optimal anpassbar ist.

Die Erfindung betrifft weiterhin ein Möbelstück mit einer Kantenleiste, die die vorteilhaften Ausführungsformen der vorherigen Abschnitte aufweist.
Das Möbelstück zeichnet sich weiterhin dadurch aus, dass die erfindungsgemäße Kantenleiste eine Schälfestigkeit von wenigstens 40 N/cm nach DIN 2851, gemessen an Spanplatten, aufweist.

Die erfindungsgemäße Kantenleiste für Möbelstücke soll nun an diese nicht einschränkenden Ausführungsbeispielen näher beschrieben werden.

Es zeigen:
- Fig. 1:: schematische Schnittdarstellung eines Möbelstücks und einer daran anzubringen, erfindungsgemäßen Kantenleiste;
- Fig. 2:: schematische Darstellung eines Möbelstück und der daran befestigten, erfindungsgemäßen Kantenleiste.

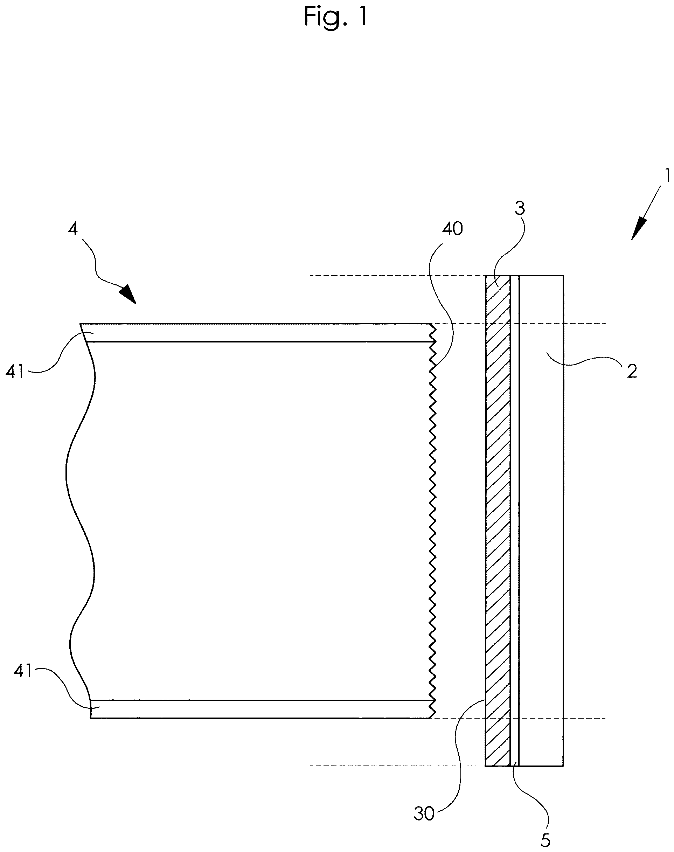

In der **Fig. 1** ist die erfindungsgemäße Kantenleiste 1 für Möbelstücke 4 umfassend eine Schmelzschicht 3 sowie eine damit verbundene Strukturschicht 2 dargestellt.

Dieser Werkstoff der Schmelzschicht 3 ist in diesem Ausführungsbeispiel ein Copolyamid welches ausgehend von den Polyamidbildnern, ausgewählt aus der Gruppe Caprolactam, Hexamethylendiamin, Adipinsäure, Laurinlactam und Aminoundecansäure hergestellt ist und einen Schmelzflussindex MFI von etwa 15 g / 10 min. gemäß DIN ISO 1133 bei 160 °C / 1,20 kg aufweist.

Zwischen der Strukturschicht 2 und der Schmelzschicht 3 der erfindungsgemäßen Kantenleiste ist in diesem Ausführungsbeispiel eine Funktionsschicht 5 angeordnet, die ausgewählt ist aus der Gruppe der Polyurethane. Der Werkstoff der Schmelzschicht 3 weist in diesem Ausführungsbeispiel eine Zugfestigkeit von etwa 720 MPa nach DIN EN ISO 527 sowie eine Bruchdehnung von etwa 410 % nach DIN EN ISO 527 auf.

Als Strukturschicht 2 der Kantenleiste 1 wird im Sinne der Erfindung eine Schicht bezeichnet, die der Kantenleiste 1 im Wesentlichen ihre Struktur, ihre Geometrie sowie auch ihr Design verleiht.

Der Werkstoff der Strukturschicht 2 kann ausgewählt sein aus beliebigen Werkstoffen, beispielsweise aus polymeren Werkstoffen wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyurethan (PUR); sowie Mischungen aus wenigstens zwei diesen Materialien basiert. Dabei können dem polymeren Werkstoff der Strukturschicht geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten.
Der Werkstoff der Schmelzschicht 3 der Kantenleiste 1 weist in diesem Ausführungsbeispiel einen Schmelztemperaturbereich von etwa 120 °C auf, sodass der erforderliche Energieeintrag um den Werkstoff der Schmelzschicht fügbar zu gestalten, relativ gering gehalten werden kann.

Der Werkstoff der Schmelzschicht 3 ist in diesem Ausführungsbeispiel ein Copolyamid welches wenigstens ein Polyamid 6, wenigstens ein Polyamid 6.6 sowie wenigstens ein Polyamid 12 umfasst. Der Werkstoff der Schmelzschicht 3 enthält ein Polyamid 6 zu etwa 45 bis 35 Gew.-%, ein Polyamid 6.6 zu etwa 30 bis 10 Gew.-%, sowie ein Polyamid 12 zu etwa 45 bis 35 Gew.-%, bezogen auf die Gesamtmasse.

Die Kantenleiste 1 ist bei bestimmungsgemäßer Verwendung dafür vorgesehen, dass diese über die Schmelzschicht 3 mit der Stirnseite 40 des Möbelstücks 4 in einen stoffschlüssigen, adhäsiven Verbund gebracht wird.

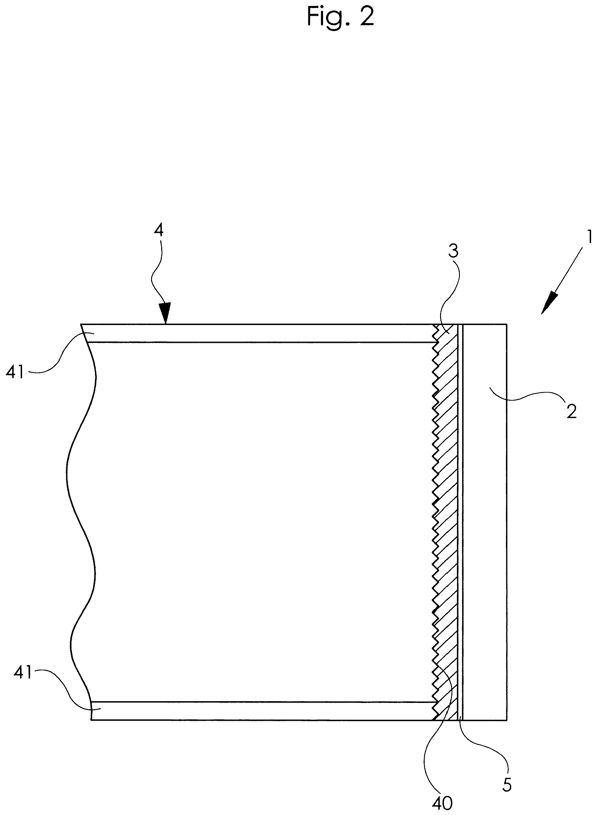

In der **Fig. 2** ist eine perspektivische Schnittdarstellung eines Möbelstücks 4 mit der erfindungsgemäßen Kantenleiste 1 dargestellt, wobei die Schmelzschicht 3 der Kantenleiste 1 mit der Stirnseite 40 des Möbelstücks 4 stoffschlüssig, adhäsiv verbunden ist.

In diesem Ausführungsbeispiel enthält der Werkstoff der Schmelzschicht 3 ein Polyamid 6 zu etwa 45 bis 35 Gew.-%, ein Polyamid 10 zu etwa 30 bis 10 Gew.-% sowie ein Polyamid 12 zu etwa 45 bis 35 Gew.-%, bezogen auf die Gesamtmasse.

Der Werkstoff der Strukturschicht 2 basiert dabei auf Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyurethan (PUR); sowie Mischungen aus wenigstens zwei diesen Materialien.

Durch Beaufschlagung insbesondere der Schmelzschicht 3 der erfindungsgemäßen Kantenleiste 1 mit einer Energie aus einer Energiequelle ausgewählt aus der Gruppe Laserquelle, Infrarotquelle, Ultraschallquelle, Magnetfeldquelle, Mikrowellenquelle, Plasmaquelle sowie Begasungsquelle und dergleichen wird der Werkstoff der Schmelzschicht 3 die durch die Energiequelle zugeführte Energie aufnehmen und sich auf einen Schmelztemperaturbereich von etwa bis 100 bis 125 °C erwärmen.

In diesem Zustand ist es möglich, die erfindungsgemäße Kantenleiste 1 über die Schmelzschicht 3 mit der Stirnseite 40 des Möbelstücks 4 stoffschlüssig in einen adhäsiven Verbund zu bringen.

Dabei ist es durch den Werkstoff der Schmelzschicht 3 der erfindungsgemäßen Kantenleiste 1 erstmals möglich, das auch die Deckschichten 41 des Möbelstücks 4 mit dem Werkstoff der Schmelzschicht 3 eine stoffschlüssige Verbindung eingehen. Dies passiert beispielsweise bei Deckschickten aus CPL-Schichtstoff, HPL- Schichtstoff, sowie melamingetränkte Papierwerkstoffe dadurch, dass diese Werkstoffe in der Lage sind, mit dem Werkstoff der Schmelzschicht 3 der erfindungsgemäßen Kantenleisten 1 chemische Bindungen, insbesondere Nebenvalenzbindungen, vorteilhafterweise Wasserstoffbrückenbindungen zu bilden.

Es liegt auch im Rahmen der Erfindung, dass der Werkstoff der Schmelzschicht 3 der erfindungsgemäßen Kantenleiste 1 licht- und / oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält. Im konkreten Ausführungsbeispiel weist der Werkstoff der Schmelzschicht 3 der erfindungsgemäßen Kantenleiste 1 einen anorganische Pigmente enthaltenden Zusatzstoff in einer Menge von etwa 0,3 Gew.-% bezogen auf das Gesamtgewicht auf, wobei dieser Zusatzstoff ausgewählt ist aus der Gruppe der Metallphosphate, insbesondere Kupferhydroxidphosphat.

Durch die vorteilhafte Ausgestaltung der erfindungsgemäßen Kantenleiste 1 insbesondere des Werkstoffes der Schmelzschicht 3 ist es überraschenderweise erstmals möglich, dass die Kantenleiste 1 eine Schälfestigkeit von wenigstens 40 N / cm nach DIN 2851, gemessen an Spanplatten, aufweist und sich somit von den bisher bekannten Kantenleisten aus dem Stand der Technik abhebt.

Weiterhin ist es mit der erfindungsgemäßen Kantenleiste 1 erstmals möglich, an den Schmalseiten 40 bekantete Möbelstücke 4 zur Verfügung zu stellen, die in den gängigen Prüfungen zur Feuchte- und Klimabeständigkeit gemäß den Anforderungen des AMK-Merkblattes AMK-MB-005 Ausgabedatum 07/2007 geprüft, zu optimalen Ergebnissen führen, d.h., dass die Möbelstücke 4 mit der erfindungsgemäßen Kantenleiste 1 nach der absolvierten Prüfung nahezu keinerlei Schädigungen aufweisen wie Rissbildungen, Fugenbildungen, Ablösungen oder Veränderungen und das insbesondere auch die Deckschichten 41 der Möbelstücke 4 nach wie vor sowohl mit dem Möbelstück 4 als auch mit dem Werkstoff der Schmelzschicht 3 der erfindungsgemäßen Kantenleiste 1 adhäsiv verbunden sind und keine Ablöseerscheinungen der Deckschichten 41 des Möbelstück 4 erkennbar sind.

## Patentansprüche

1. Kantenleiste (1) für Möbelstücke, umfassend eine Schmelzschicht (3), sowie eine mit der Schmelzschicht (3) verbundene Strukturschicht (2), die beide wenigstens teilweise einen polymeren Werkstoff aufweisen, wobei der Werkstoff der Schmelzschicht (3) ausgewählt ist aus der Gruppe der Polyamide (PA), vorzugsweise eines aliphatischen und / oder teilaromatischen und / oder aromatischen Polyamids, wobei der Werkstoff der Schmelzschicht (3) ein Copolyamid ist, welches aus-gehend von Polyamidbildnern, ausgewählt aus der Gruppe, umfassend Caprolactam, Laurinlactam, Aminoundecansäure, Hexamethylendiamin, Adipinsäure, Azelainsäure, Dodecandisäure, Piperazin hergestellt ist und einen Schmelzflussindex (MFI) von wenigstens 10 g / 10 min., bevorzugt 15 g bis 100 g/ 10 min., besonders bevorzugt 15 g bis 50 g/ 10 min. gemäß DIN ISO 1133 bei 160 °C / 1,20 kg aufweist, **dadurch gekennzeichnet, dass** der Werkstoff der Schmelzschicht (3) wenigstens ein Copolyamid mit einem Schmelztemperaturbereich von etwa 95 bis 150 °C, vorzugsweise 100 bis 125 °C aufweist, dass der Werkstoff der Schmelzschicht (3) eine kristalline Dichte ρ_{c} von wenigstens 1,13 g/cm³ nach DIN EN ISO 1183-1 (2013-04) aufweist.

2. Kantenleiste (1) nach Anspruch 1, **dadurch gekennzeichnet, dass** der Werkstoff der Schmelzschicht (3) wenigstens ein weiteres Copolyamid und/oder wenigstens ein weiteres Polyamid, sowie Mischungen aus wenigstens zwei dieser Materialien, enthält.

3. Kantenleiste (1) nach einem der vorhergehenden Ansprüche, **dadurch gekennzeichnet, dass** der Werkstoff der Schmelzschicht (3) eine Härte Shore D von wenigstens 40 gemäß DIN EN ISO 868 aufweist.

4. Kantenleiste (1) nach einem der vorhergehenden Ansprüche, **dadurch gekennzeichnet, dass** die, der Schmelzschicht (3) gegenüberliegend angeordnete, Seite der Strukturschicht (2) einer Oberflächenbehandlung durch ein Corona-Verfahren, ein Beflammungs- Verfahren, ein Plasma-Verfahren, ein Silikatisierungs- Verfahren und dergleichen unterworfen wurde.

5. Kantenleiste (1) nach einem der vorhergehenden Ansprüche, **dadurch gekennzeichnet, dass** der Werkstoff der Schmelzschicht (3) und/oder der Werkstoff der Strukturschicht (2) licht- und/oder strahlungsabsorbierende Zusatzstoffe in einer Menge von 0,01 bis 5 Gew.-%, bevorzugt 0,02 bis 3,0 Gew.-%, bezogen auf die Gesamtmenge, eingelagert enthält.

6. Kantenleiste (1) nach einem der vorhergehenden Ansprüche, **dadurch gekennzeichnet, dass** der Werkstoff der Schmelzschicht (3) und/oder der Werkstoff der Strukturschicht (2) wenigstens einen, teilweise anorganische und/oder organische Pigmente enthaltenden, Zusatzstoff in einer Menge von etwa 0,01 bis 5 Gew.-%, bevorzugt 0,02 bis 3,0 Gew.-%, bezogen auf die Gesamtmenge, eingelagert enthält.

7. Kantenleiste (1) nach Anspruch 6, **dadurch gekennzeichnet, dass** der Zusatzstoff der Schmelzschicht (3) und/oder der Strukturschicht (2) ausgewählt ist aus der Gruppe der Metalloxide, der Metallphosphate sowie der Metallsalze organischer Anionen.

8. Kantenleiste (1) nach einem der vorhergehenden Ansprüche, **dadurch gekennzeichnet, dass** der Werkstoff der Schmelzschicht (3) polare Gruppen basierend auf Amiden, Aminen, Carbonsäuren bzw. deren Ester bzw. Salze insbesondere Acrylsäure, Acrylsäureester, Silanen, Titanaten, Alkoholen, Imiden, Ammoniumverbindungen oder Sulfonsäuren bzw. deren Estern oder Salzen, geblockten Isocyanaten oder dgl. aufweist.

9. Kantenleiste (1) nach einem der vorangegangenen Ansprüche, **dadurch gekennzeichnet, dass** der Werkstoff der Schmelzschicht (3) und/oder der Strukturschicht (2) wenigstens eines der folgenden Additive enthält: Stabilisatoren zur Verbesserung der Beständigkeit gegen Lichteinwirkung, UV-Strahlung und Bewitterung; Stabilisatoren zur Verbesserung der thermischen und thermooxidativen Beständigkeit; Stabilisatoren zur Verbesserung der hydrolytischen Beständigkeit, Stabilisatoren zur Verbesserung der acidolytischen Beständigkeit, Gleitmittel, Entformungshilfen, farbgebende Additive, kristallisationsregulierende Substanzen und Nukleierungsmittel, Flammschutzmittel, Schlagzähmodifier, Füllstoffe und / oder Weichmacher.

10. Kantenleiste (1) nach einem der vorhergehenden Ansprüche, **dadurch gekennzeichnet, dass** der Werkstoff der Schmelzschicht (3) über wenigstens eine Funktionsschicht (5) von der Strukturschicht (2) beabstandet angeordnet ist.

11. Möbelstück mit einer Kantenleiste (1) nach wenigstens einem der Ansprüche 1 bis 10.

## Claims

1. Edge trim (1) for pieces of furniture, comprising a melting layer (3) and a structural layer (2) connected to the melting layer (3), both comprising at least in part a polymeric material, wherein the material of the melting layer (3) is selected from the group of the polyamides (PA), preferably an aliphatic and/or semi-aromatic and/or aromatic polyamide, wherein the material of the melting layer (3) is a copolyamide which is made starting from polyamide formers selected from the group comprising caprolactam, laurolactam, aminoundecanoic acid, hexamethylenediamine, adipic acid, azelaic acid, dodecanedioic acid and piperazine, and has a melt flow index (MFI) of at least 10 g/10 min., preferably 15 g to 100 g/10 min., particularly preferably 15 g to 50 g/10 min. according to DIN ISO 1133 at 160°C/1.20 kg, **characterised in that** the material of the melting layer (3) comprises at least one copolyamide with a melting point range of approximately 95 to 150°C, preferably 100 to 125°C, and **in that** the material of the melting layer (3) has a crystalline density ρ_{c} of at least 1.13 g/cm³ according to DIN EN ISO 1183-1 (2013-04).

2. Edge trim (1) according to claim 1, **characterised in that** the material of the melting layer (3) contains at least one further copolyamide and/or at least one further polyamide, as well as mixtures of at least two of these materials.

3. Edge trim (1) according to one of the preceding claims, **characterised in that** the material of the melting layer (3) has a Shore D hardness of at least 40 according to DIN EN ISO 868.

4. Edge trim (1) according to one of the preceding claims, **characterised in that** the side of the structural layer (2) arranged opposite the melting layer (3) has been subjected to a surface treatment by a corona method, a flame method, a plasma method, a silicatisation method and the like.

5. Edge trim (1) according to one of the preceding claims, **characterised in that** the material of the melting layer (3) and/or the material of the structural layer (2) contains light- and/or radiation-absorbing additives incorporated therein in a quantity of 0.01 to 5 wt.%, preferably 0.02 to 3.0 wt.%, based on the total quantity.

6. Edge trim (1) according to one of the preceding claims, **characterised in that** the material of the melting layer (3) and/or the material of the structural layer (2) contains at least one additive incorporated therein in a quantity of approximately 0.01 to 5 wt.%, and preferably 0.02 to 3.0 wt.%, based on the total quantity, said additive partially containing inorganic and/or organic pigments.

7. Edge trim (1) according to claim 6, **characterised in that** the additive of the melting layer (3) and/or of the structural layer (2) is selected from the group of the metal oxides, the metal phosphates and the metal salts of organic anions.

8. Edge trim (1) according to one of the preceding claims, **characterised in that** the material of the melting layer (3) comprises polar groups based on amides, amines, carboxylic acids and/or the esters and/or salts thereof, in particular acrylic acid, acrylic acid esters, silanes, titanates, alcohols, imides, ammonium compounds or sulfonic acids and/or the esters and/or salts thereof, blocked isocyanates or the like.

9. Edge trim (1) according to one of the preceding claims, **characterised in that** the material of the melting layer (3) and/or of the structural layer (2) contains at least one of the following additives: stabilisers for improving resistance to the action of light, UV radiation and weathering; stabilisers for improving thermal and thermooxidative resistance; stabilisers for improving hydrolytic resistance, stabilisers for improving acidolytic resistance, lubricants, mould release agents, colouring additives, crystallisation-regulating substances and nucleating agents, flame retardants, impact modifiers, fillers and/or plasticisers.

10. Edge trim (1) according to one of the preceding claims, **characterised in that** the material of the melting layer (3) is arranged such that it is spaced apart from the structural layer (2) by way of at least one functional layer (5).

11. Piece of furniture having an edge trim (1) according to at least one of claims 1 to 10.

## Revendications

1. Bande de chant (1) pour des meubles, comprenant une couche de fusion (3), ainsi qu'une couche de structure (2) reliée à la couche de fusion (3), qui présentent toutes deux au moins en partie un matériau polymère, dans laquelle le matériau de la couche de fusion (3) est choisi parmi le groupe des polyamides (PA), de préférence d'un polyamide aliphatique et/ou partiellement aromatique et/ou aromatique, dans laquelle le matériau de la couche de fusion (3) est un copolyamide, lequel est fabriqué en partant de formateurs de polyamide choisis parmi le groupe comprenant du caprolactame, du laurinlactame, de l'acide amino-undécanoïque, de l'hexaméthylènediamine, de l'acide adipique, de l'acide azélaïque, de l'acide dodécanoïque, de la pipérazine et présente un indice de fluidité à chaud (IFC) d'au moins 10 g/10 min, de manière préférée de 15 g à 100 g/10 min, de manière particulièrement préférée de 15 g à 50 g/10 min selon la norme DIN ISO 1133 à 160 °C/1,20 kg, **caractérisée en ce que** le matériau de la couche de fusion (3) présente au moins un copolyamide avec une plage de températures de fusion d'environ 95 à 150 °C, de préférence de 100 à 125 °C, que le matériau de la couche de fusion (3) présente une densité cristalline ρ_{c} d'au moins 1,13 g/cm³ selon la norme DIN EN ISO 1183-1 (2013-04).

2. Bande de chant (1) selon la revendication 1, **caractérisée en ce que** le matériau de la couche de fusion (3) contient au moins un autre copolyamide et/ou au moins un autre polyamide, ainsi que des mélanges composés d'au moins deux desdits matériaux.

3. Bande de chant (1) selon l'une quelconque des revendications précédentes, **caractérisée en ce que** le matériau de la couche de fusion (3) présente une dureté Shore D d'au moins 40 selon la norme DIN EN ISO 868.

4. Bande de chant (1) selon l'une quelconque des revendications précédentes, **caractérisée en ce que** le côté, disposé de manière à faire face à la couche de fusion (3), de la couche de structure (2) a été soumis à un traitement de surface par un procédé Corona, un procédé d'exposition à une flamme, un procédé au plasma, un procédé de silicatisation et similaire.

5. Bande de chant (1) selon l'une quelconque des revendications précédentes, **caractérisée en ce que** le matériau de la couche de fusion (3) et/ou le matériau de la couche de structure (2) contiennent de manière intégrée des additifs à absorption de lumière et/ou de rayonnement en une quantité de 0,01 à 5 % en poids, de manière préférée de 0,02 à 3,0 % en poids, par rapport à la quantité totale.

6. Bande de chant (1) selon l'une quelconque des revendications précédentes, **caractérisée en ce que** le matériau de la couche de fusion (3) et/ou le matériau de la couche de structure (2) contiennent de manière intégrée au moins un additif contenant des pigments en partie inorganiques et/ou organiques, en une quantité d'environ 0,01 à 5 % en poids, de manière préférée de 0,02 à 3,0 % en poids, par rapport à la quantité totale.

7. Bande de chant (1) selon la revendication 6, **caractérisée en ce que** l'additif de la couche de fusion (3) et/ou de la couche de structure (2) est choisi parmi le groupe des oxydes métalliques, des phosphates métalliques ou des sels métalliques d'ions organiques.

8. Bande de chant (1) selon l'une quelconque des revendications précédentes, **caractérisée en ce que** le matériau de la couche de fusion (3) présente des groupes polaires à base d'amides, d'amines, d'acides carboxyliques ou leurs esters ou sels, en particulier de l'acide acrylique, de l'ester d'acide acrylique, des silanes, des titanates, des alcools, des imides, des composés d'ammonium ou des acides sulfoniques ou leurs esters ou sels, des isocyanates bloqués ou similaires.

9. Bande de chant (1) selon l'une quelconque des revendications précédentes, **caractérisée en ce que** le matériau de la couche de fusion (3) et/ou de la couche de structure (2) contient au moins un des additifs suivants : des stabilisateurs servant à améliorer la résistance à l'effet de la lumière, au rayonnement UV et aux intempéries ; des stabilisateurs servant à améliorer la résistance thermique et thermo-oxydative ; des stabilisateurs servant à améliorer la résistance hydrolytique, des stabilisateurs servant à améliorer la résistance acidolytique, des lubrifiants, des agents d'aide au démoulage, des additifs colorants, des substances de régulation de cristallisation et des agents de nucléation, des retardateurs de flammes, des agents de modification de la résilience, des charges et/ou des plastifiants.

10. Bande de chant (1) selon l'une quelconque des revendications précédentes, **caractérisée en ce que** le matériau de la couche de fusion (3) est disposé à distance de la couche de structure (2) par-dessus au moins une couche fonctionnelle (5).

11. Meuble avec une bande de chant (1) selon au moins l'une quelconque des revendications 1 à 10.
